# EUROPÄISCHE PATENTSCHRIFT

(11) **EP 1 666 677 B1**
(45) Veröffentlichungstag und Bekanntmachung des Hinweises auf die Patenterteilung: **04.01.2012**
(21) Anmeldenummer: 05024350.0
(22) Anmeldetag: 09.11.2005
(51) Int. Cl.: E03F 5/14, C02F 3/20

(54) **Belüftungsvorrichtung zur Belüftung eines Absetzbeckens und Absetzbecken mit einer solchen Belüftungsvorrichtung**
Aerating device for aerating a sedimentation tank and sedimentation tank comprising such an aerating device
Dispositif pour l'aération d'un bassin de sédimentation et bassin de sédimentation comprenant un tel dispositif

(30) Priorität: 30.11.2004 DE 102004057643
(43) Veröffentlichungstag der Anmeldung: 07.06.2006
(73) Patentinhaber: Ulrich, Georg, 71570 Oppenweiler (DE)
(72) Erfinder: Ulrich, Georg, 71570 Oppenweiler (DE)
(74) Vertreter: Lenz, Steffen

(56) Entgegenhaltungen:
- EP-A- 1 149 956
- DE-A1- 10 151 498
- DE-A1- 10 246 633
- DE-A1- 19 933 391

## Beschreibung

Die Erfindung betrifft eine Belüftungsvorrichtung zur Belüftung eines Absetzbeckens für sedimentierbare Feststoffe enthaltende Flüssigkeiten, insbesondere Wasser, mit einem zumindest teilweise unterhalb der Flüssigkeitsoberfläche anordbaren und mit einer Druckgasquelle verbindbaren Hohlkörper mit wenigstens einer Austrittsöffnung für im Innern des Hohlkörpers befindliches Gas. Sie ist ferner auf ein Absetzbecken für sedimentierbare Feststoffe enthaltende Flüssigkeiten, insbesondere Wasser, mit einer zumindest teilweise unterhalb der Flüssigkeitsoberfläche angeordneten Belüftungsvorrichtung mit einem mit einer Druckgasquelle verbindbaren Hohlkörper mit wenigstens einer Austrittsöffnung für im Innern des Hohlkörpers befindliches Gas gerichtet.

Absetzbecken mit Belüftungsvorrichtungen sind in vielerlei Ausgestaltung bekannt und finden z.B. in Form von Regenwasserrückhaltebecken, Regenwasserüberlaufbecken, Geschiebeschächten etc. in Vorflutern von Abwasserleitungssystemen, kommunalen oder gewerblichen Kläranlagen sowie auch in solchen Kläranlagen selbst verbreiteten Einsatz. Ihr Zweck besteht vornehmlich darin, von dem Wasser mitgeführte, insbesondere mineralische Feststoffe, wie Sand, Kies, Split oder andere körnige bzw. granulatförmige Feststoffe, durch Sedimentation derselben zurückzuhalten, so daß sie nachfolgende Einrichtungen nicht blockieren oder gar beschädigen oder auch einer wirtschaftlichen Verwendung zugeführt werden können.

Um zu verhindern, daß gemeinsam mit den insbesondere mineralischen Feststoffen sedimentierte organische Substanzen, wie Fäkalien, Nahrungsmittel- und Pflanzenreste oder dergleichen, einem Fäulnisvorgang unterworfen werden, so daß sich im Sediment ein anaerober Zustand einstellt, ist es erforderlich, das im Bodenbereich des Absetzbeckens abgeschiedene Sediment zu belüften, was in der Regel durch Einblasen von Luft mittels der Belüftungsvorrichtung geschieht, aber je nach Zusammensetzung des zu reinigenden Wassers auch durch Einblasen von anderen Gasen, beispielsweise technischem Sauerstoff, erfolgen kann. Die Belüftung kann ferner zur Flotation von Schwebstoffen dienen, welche von den aufsteigenden Gasbläschen nach oben in Richtung der Wasseroberfläche mitgeführt werden und sich dort anreichern, so daß sie dort mechanisch, z.B. mittels Sieben, Rechen, Filtern oder dergleichen, abgetrennt werden können.

Die Belüftung soll dabei zweckmäßig unmittelbar an der Oberfläche des am Boden des Absetzbecken befindlichen Sedimentes geschehen, um dieses einerseits hinreichend mit Luft bzw. Sauerstoff zu versorgen, andererseits dieses nicht ständig aufzuwirbeln und ferner möglichst sicherzustellen, daß die Austrittsöffnungen des Hohlkörpers der Belüftungsvorrichtung nicht durch sedimentierte Feststoffe verstopft werden. Die Belüftung kann bedarfsweise kontinuierlich oder in zeitlichen Abständen erfolgen.

Problematisch ist grundsätzlich die bereits angedeutete Gefahr einer Verstopfung der Austrittsöffnungen des mit Gas beaufschlagten Hohlkörpers der Belüftungsvorrichtung, welche zu Betriebsstörungen des Absetzbeckens führt und es erforderlich macht, den Hohlkörper der Belüftungsvorrichtung mittels innenseitigem Überdruck auszublasen oder den Hohlkörper gar auf zeitaufwendige Weise aus dem Absetzbecken zu entfernen und zu reinigen. Ferner ist der bei bekannten Anlagen stationär in dem Absetzbecken angeordnete, mit Gas bzw. Luft aus der Druckgasquelle beaufschlagte Hohlkörper der Belüftungsvorrichtung nur bei einer bestimmten Füllhöhe an Sediment in dem Absetzbecken in der oben erläuterten, optimal wirksamen Höhe angeordnet, so daß unmittelbar nach einer Räumung des Absetzbeckens (d.h. nach einer Entfernung des abgeschiedenen Sedimentes) die Gefahr besteht, daß die frisch am Beckenboden sedimentierten Feststoffe nicht hinreichend belüftet werden, während bei einem Anstieg der Füllhöhe an Sediment bis oberhalb des Hohlkörpers der Belüftungsvorrichtung die Gefahr einer Verstopfung derselben besteht und die abgeschiedenen Feststoffe aufgewirbelt werden können, was wiederum die Fest-/Flüssigtrennung und - sofern vorgesehen - insbesondere eine mit dem Eintrag von Gas einhergehende Flotation von Schwebstoffen beeinträchtigt.

Die DE 101 51 498 A1 und die DE 102 46 633 A1 beschreiben solche auch als "Sandfang" bezeichneten Absetzbecken, welche mit einer Belüftungsvorrichtung in Form von fest eingebauten Belüftungsrohren oder -düsen ausgestattet sind. Im erstgenannten Fall ist das Becken nach Art eines Zyklons durchflossen, während es im letztgenannten Fall im wesentlichen linear durchflossen ist. Der EP 1 149 956 A1 ist ein weiteres Absetzbecken in Form eines Geschiebeschachtes entnehmbar, das mit einer Belüftungsvorrichtung ausgestattet ist, welche einen an eine Druckgasquelle angeschlossenen Hohlkörper in Form eines fest in dem Geschiebeschacht installierten Gebläserohres aufweist. Das Gebläserohr ist über seine gesamte Länge hinweg mit Luftaustrittsöffnungen versehen. Um ein Zusetzen des Gebläserohres mit abgesetztem Sediment zu verhindern, wird dieses mittels Druckstößen in bestimmten Zeitabständen gespült. Um für ein besseres Anlaufverhalten des Gebläses zu sorgen, ist das Gebläsesrohr an beiden Enden mit der Druckluftquelle verbunden und sind die beiden Verbindungsleitungen unterschiedlich dimensioniert, so daß sich der Druck auf beiden Leitungen bzw. die Luftströmung durch beide Leitungen unterschiedlich schnell abbaut, was eine unterschiedlich schnelle Belastung des Gebläses bewirkt und auf diese Weise zu dem verbesserten Ansprechverhalten führt.

Hinsichtlich der Nachteile solcher bekannten Gebläses gilt nichts anderes das oben bereits erwähnte. So ist es mittels eines derartigen stationär in dem Absetzbecken befestigten Belüftungsrohres insbesondere nicht möglich, unmittelbar an der Oberfläche des am Boden des Absetzbeckens befindlichen Sedimentes für eine Belüftung zu sorgen, um dieses einerseits hinreichend mit Sauerstoff zu versorgen, andererseits dieses nicht ständig aufzuwirbeln und ferner möglichst sicherzustellen, daß die Austrittsöffnungen des Gebläserohres nicht durch sedimentierte Feststoffe verstopft werden.

Die DE 199 33 391 A1 beschreibt schließlich ein weiteres Absetzbecken, welches ähnlich wie das gemäß der vorerwähnten EP 1 149 956 A1 in Form eines Geschiebeschachtes ausgebildet ist. Das Absetzbecken gemäß der DE 199 33 391 A1 weist ebenfalls ein stationär eingebautes Belüftungsrohr zur Belüftung des abgeschiedenen Sedimentes auf. Des weiteren umfaßt das Absetzbecken eine Meßanordnung mit einem rohrförmigen Schwimmkörper, welche in zeitlichen Abständen mit Druckluft befüllt wird, um die Flüssigkeit aus dem Schwimmkörper zu verdrängen, so daß dieser aufschwimmt. Setzt sich der Schwimmkörper hiernach wieder auf dem Sediment ab, läßt sich in Abhängigkeit der Position des Schwimmkörpers die Füllhöhe an abgeschiedenem Sediment ermitteln. Hinsichtlich der Nachteile der Belüftungsvorrichtung gilt das oben gesagte.

Der Erfindung liegt daher die Aufgabe zugrunde, eine Belüftungsvorrichtung zur Belüftung eines Absetzbeckens für sedimentierbare Feststoffe enthaltende Flüssigkeiten der eingangs genannten Art sowie ein mit einer solchen Belüftungsvorrichtung ausgestattetes Absetzbecken dahingehend weiterzubilden, daß die vorgenannten Nachteile auf einfache und kostengünstige sowie effektive Weise vermieden werden.

Erfindungsgemäß wird diese Aufgabe bei einer Belüftungsvorrichtung der eingangs genannten Art dadurch gelöst, daß der Hohlkörper höhenverlagerbar in dem Absetzbecken anordbar ist, daß der Hohlkörper an einer tieferen, insbesondere an seiner tiefsten Stelle offen ausgebildet ist, und daß die wenigstens eine Austrittsöffnung mit einem solchen Abstand oberhalb der tieferen, offenen Stelle des Hohlkörpers angeordnet ist, daß der Hohlkörper bei einem vorherbestimmten ersten Flüssigkeitsniveau in seinem Innern an seiner tieferen, offenen Stelle oder zwischen derselben und seiner wenigstens einen Austrittsöffnung einen Auftrieb in der Flüssigkeit erfährt, während er bei einem vorherbestimmten zweiten Flüssigkeitsniveau in seinem Innern oberhalb des ersten Flüssigkeitsniveaus und unterhalb der wenigstens einen Austrittsöffnung oder an derselben keinen Auftrieb erfährt.

Zur Lösung des geschilderten Problem sieht die Erfindung bei einem Absetzbecken mit einer Belüftungsvorrichtung der eingangs genannten Art ferner vor, daß der Hohlkörper der Belüftungsvorrichtung höhenverlagerbar in dem Absetzbecken angeordnet ist, daß der Hohlkörper an einer tieferen, insbesondere an seiner tiefsten Stelle offen ausgebildet ist, und daß die wenigstens eine Austrittsöffnung mit einem solchen Abstand oberhalb der tieferen, offenen Stelle des Hohlkörpers angeordnet ist, daß der Hohlkörper bei einem vorherbestimmten ersten Flüssigkeitsniveau in seinem Innern an seiner tieferen, offenen Stelle oder zwischen derselben und seiner wenigstens einen Austrittsöffnung einen Auftrieb in der Flüssigkeit erfährt, während er bei einem vorherbestimmten zweiten Flüssigkeitsniveau in seinem Innern oberhalb des ersten Flüssigkeitsniveaus und unterhalb der wenigstens einen Austrittsöffnung oder an derselben keinen Auftrieb erfährt.

Die erfindungsgemäße Ausgestaltung der Belüftungsvorrichtung begegnet dem der Erfindung zugrunde liegenden Problem auf überraschend einfache und wirksame Weise dadurch, daß der Hohlkörper der Belüftungsvorrichtung rein hydraulisch stets auf dem optimalen Niveau im Bereich der mit fortwährendem Betrieb ansteigenden Oberfläche der am Boden des Absetzbeckens sedimentierten Feststoffe gehalten wird, ohne daß ein zusätzlicher motorischer Antrieb des in dem Absetzbecken höhenverlagerbaren Hohlkörpers in Verbindung mit einem die Füllhöhe an Sediment erfassenden Meßeinrichtung erforderlich wäre. Dabei kann die Belüftung unter Gewährleistung eines einwandfreien, dauerhaften Betriebs und insbesondere unter Vermeidung etwaiger Verstopfungen der Austrittsöffnung(en) des Hohlkörpers entweder in zeitlichen Abständen oder kontinuierlich geschehen. Mit "Auftrieb" im Sinne der Erfindung ist im übrigen eine Auftriebskraft angesprochen, welche hinreichend groß ist, um den Hohlkörper in Richtung der Flüssigkeitsoberfläche nach oben zu verlagern.

Die Wirkungsweise der erfindungsgemäßen Belüftungsvorrichtung ist nachfolgend näher erläutert: Bei Inbetriebnahme des geräumten Absetzbeckens wird der Hohlkörper der Belüftungsvorrichtung in das Absetzbecken eingesenkt, wobei sich das Innenvolumen des Hohlkörpers entsprechend dem Flüssigkeitsstand des Absetzbeckens mit Wasser füllt. Nachdem dies geschehen ist, liegt der Hohlkörper auf dem Boden des Absetzbeckens auf. Sodann wird der Hohlkörper der Belüftungsvorrichtung mittels der z.B. mit Druckluft arbeitenden Druckgasquelle mit Gas beaufschlagt, welches die in den Hohlkörper eingedrungene Flüssigkeit bis zu dem Niveau der Austrittsöffnung(en) verdrängt, wonach das Gas aus dieser bzw. aus diesen austritt und den Bodenbereich des Absetzbeckens belüftet. Zumindest ein Teil des Innenvolumens des Hohlkörpers zwischen seiner tieferen bzw. tiefsten, offenen Stelle und der/den von dieser mit Abstand oberhalb angeordneten Austrittsöffnung(en) bleibt aufgrund des an der offenen Stelle wirkenden hydrostatischen Flüssigkeitsdruckes, welcher größer ist als der auf die demgegenüber höhere(n) Austrittsöffnung(en) wirkende hydrostatische Druck, bis zu einem vorherbestimmten, zweiten Flüssigkeitsniveau mit Wasser befüllt, bei welchem der Hohlkörper keinen Auftrieb erfährt, so daß er weiterhin auf dem Boden des Absetzbeckens aufliegen bleibt.

Während beim fortwährenden Betrieb des Absetzbeckens nun nach und nach Feststoffe am Boden des Behälters abgeschieden werden, erhöht sich der von außen auf die Austrittsöffnung(en) des Hohlkörpers wirkende Druck, d.h. es kommt zusätzlich zum hydrostatischen Druck auf diesem Niveau, welcher geringer ist als der hydrostatische Druck an der unterhalb der Austrittsöffnung(en) angeordneten tieferen bzw. tiefsten, offenen Stelle des Hohlkörpers, ein von den sedimentierten, um die Austrittsöffnung(en) herum angereicherten Feststoffen bewirkter Druck hinzu, welche das Ausblasen von Gas erschwert. Erreicht dieser zusätzlich Druck einen bestimmten Wert, so wird ein Ausblasen des Gases aus der/den Austrittsöffnung(en) des Hohlkörpers gehemmt, und das auf dem zweiten Flüssigkeitsniveau im Innern des Hohlkörpers, z.B. im Bereich der Austrittsöffnung(en) oder auch unterhalb derselben, befindliche Wasser wird von dem Gas aus der tieferen bzw. tiefsten, offenen Stelle des Hohlkörpers hinaus verdrängt. Der Hohlkörper füllt sich folglich mit Gas bzw. Luft bis zu einem ersten Flüssigkeitsniveau unterhalb des zweiten Flüssigkeitsniveaus, bei welchem er keinen Auftrieb erfährt.

Erreicht nun die aus dem Innenvolumen des Hohlkörpers der Belüftungsvorrichtung nach unten in Richtung seiner tieferen bzw. tiefsten, offenen Stelle verdrängte Flüssigkeit ein vorherbestimmtes, unterhalb des zweiten Flüssigkeitsniveaus befindliches, z.B. im Bereich seiner tieferen bzw. tiefsten Stelle oder zwischen dieser und dem zweiten Flüssigkeitsniveau angeordnetes, erstes Flüssigkeitsniveau, so erfährt der Hohlkörper einen Auftrieb, welcher ihn dazu veranlaßt, sich nach oben in Richtung der Flüssigkeitsoberfläche zu verlagern. Dieser Vorgang hält so lange an, bis der durch die sedimentierten Feststoffe verursachte, zusätzliche Druck an der/den Austrittsöffnung(en) anhält, d.h. bis sich der Hohlkörper auf ein Niveau im Bereich der Oberfläche der sedimentierten Feststoffe nach oben verlagert hat. Ist dies geschehen und hat sich der zusätzliche Druck folglich um einen bestimmten Betrag vermindert oder ist gänzlich fortgefallen, so tritt die vorher von dem im Innern des Hohlkörpers befindlichen Gas verdrängte Flüssigkeit wieder in die tiefere bzw. tiefste, offene Stelle des Hohlkörpers ein, an welcher der hydrostatische Flüssigkeitsdruck größer ist als an der/den oberhalb derselben angeordneten Austrittsöffnung(en), so daß das Flüssigkeitsniveau im Innern des Hohlkörpers wieder auf das zweite Flüssigkeitsniveau ansteigt, bei welchem der Hohlkörper keinen Auftrieb mehr erfährt. Der Hohlkörper der Belüftungsvorrichtung bleibt folglich auf der - aktuellen - Oberfläche der sedimentierten Feststoffe liegen bzw. sinkt auf diese zurück, so daß der Hohlkörper wieder auf der optimalen Höhe bezüglich des Sedimentes angeordnet ist.

Auf diese Weise ist sowohl im Falle eines kontinuierlichen bzw. fortwährenden Betriebs der Belüftungsvorrichtung als auch im Falle eines mit zeitlichen Abständen erfolgenden Betriebs sichergestellt, daß der Hohlkörper der Belüftungsvorrichtung mit seiner/seinen Austrittsöffnung(en) ohne zusätzliche, insbesondere motorisierte Führungseinrichtungen stets auf dem geeigneten Niveau bezüglich der sedimentierten Feststoffe angeordnet ist, ohne daß die Gefahr einer Verstopfung, d.h. eines Zusetzens der Austrittsöffnung(en) oder gar des Hohlkörpers selbst besteht. Die Verlagerung geschieht rein hydraulisch, wobei der von der Druckgasquelle erzeugte Druck selbstverständlich durch geeignete Drucksteuerventile steuerbar sein kann.

Wie bereits angedeutet, weist der Hohlkörper der Belüftungsvorrichtung zweckmäßig eine Mehrzahl an Austrittsöffnungen auf, um einen möglichst gleichmäßigen Eintrag von Gas bzw. Luft zu gewährleisten. Die Mehrzahl an Austrittsöffnung sind dabei zweckmäßig im wesentlichen auf demselben Niveau, z.B. in horizontaler Erstreckungsrichtung des Hohlkörpers angeordnet.

Der Hohlkörper kann vorzugsweise wenigstens ein im wesentlichen U-förmiges, nach unten offenes Rohr aufweisen, wobei die Austrittsöffnung(en) z.B. seitlich des Rohres mit Abstand von seiner unteren, offenen Seite angeordnet sind. Das Rohr selbst kann eine beliebige Erstreckungsrichtung besitzen und z.B. etwa geradlinig, gebogen, wellenförmig, rund, eckig oder dergleichen sein.

In vorteilhafter Ausgestaltung kann vorgesehen sein, daß sich der Querschnitt des rohrförmigen Hohlkörpers nach unten erweitert, so daß das Rohr einen etwa glockenförmigen Querschnitt bzw. einen einer nach unten offenen Parabel etwa entsprechenden Querschnitt besitzt.

In weiterhin bevorzugter Ausführung kann vorgesehen sein, daß der Hohlkörper im wesentlichen linear, insbesondere im wesentlichen vertikal, höhenverlagerbar in dem Absetzbecken anordbar ist, was beispielsweise mittels einer vorzugsweise linearen Führung geschehen kann, welche im Innern des Absetzbeckens, insbesondere an wenigstens einer dessen seitlicher Wandungen, vorgesehen ist. Indes kann der Hohlkörper statt dessen selbstverständlich auch andersartig höhenverlagerbar in dem Absetzbecken anordbar, z.B. verschwenkbar sein.

Ein weiterer Vorteil der erfindungsgemäßen Ausgestaltung der Belüftungsvorrichtung liegt darin, daß sie die Möglichkeit gibt, dem Hohlkörper eine Meßeinrichtung zur Erfassung seiner Höhe relativ zu dem Absetzbecken zuzuordnen. Auf diese Weise läßt sich mit einer solchen, in die erfindungsgemäß während des Betriebs stets etwa im Bereich der Oberfläche der sedimentierten Feststoffe aufliegenden Belüftungseinrichtung integrierten Meßeinrichtung zugleich die Füllhöhe der sedimentierten Feststoffe erfassen und somit anzeigen, wann eine Räumung des Absetzbeckens erforderlich ist.

Eine solche Meßeinrichtung weist vorteilhafterweise wenigstens einen mit dem Hohlkörper verbundenen Signalgeber und wenigstens stationär, beispielsweise an dem Absetzbecken, anordbaren, das Signal des Signalgebers erfassenden Sensor auf. Der Signalgeber und der Sensor können prinzipiell beliebig, vorzugsweise berührungsfrei, z.B. kapazitiv, magnetisch, elektromagnetisch, z.B. mittels Lichtschranken, akustisch, z.B. mittels Echolot etc., arbeiten.

Ein erfindungsgemäßes Absetzbecken ist grundsätzlich dadurch gekennzeichnet, daß es mit einer Belüftungsvorrichtung der vorgenannten Art ausgestattet ist. Das Absetzbekken kann dabei neben anderen möglichen Ausgestaltungen in Form verschiedener Regenwasserentlastungsbecken der eingangs genannten Art insbesondere von einem Geschiebeschacht bzw. Geschieberückhalteschacht gebildet sein, welcher vornehmlich dazu dient, das in Abwasserleitungssystemen mitgeführte, insbesondere mineralische, partikuläre Material, wie beispielsweise Split, Kies, Sand und dergleichen, zu sedimentieren und somit aus dem Abwasser zu entfernen.

Gemäß einer Weiterbildung des erfindungsgemäßen Absetzbekkens ist vorgesehen, daß es eine zur Abförderung von im Bodenbereich des Absetzbeckens sedimentierten Feststoffen geeignete Räumeinrichtung mit wenigstens einer Förderschnecke aufweist, mittels welcher das Sediment insbesondere während des Betriebs, d.h. ohne Stillstandszeiten, aus dem Absetzbecken entfernt werden kann, ohne die Belüftungsvorrichtung aus dem Absetzbecken zu entfernen.

Die Förderschnecke der Räumeinrichtung ist dabei vorzugsweise im Innern eines Förderrohres starr angeordnet und gemeinsam mit dem Förderrohr rotierbar, was den Vorteil hat, daß das Förderrohr praktisch nicht verstopfen kann, wie es bei einer relativ zu einem stationären Rohr rotierbaren, z.B. an einer zentralen Welle festgelegten Förderschnecke der Fall ist. Die Förderschnecke kann dabei insbesondere am Innenumfang des Förderrohres verschweißt oder verschraubt sein, anstatt an einer zentralen Welle befestigt zu sein.

Ferner weist das Absetzbecken zweckmäßig wenigstens einen oberhalb seines Bodens und zweckmäßig auch oberhalb der Austrittsöffnungen des Hohlkörpers der Belüftungsvorrichtung angeordneten Zulauf sowie wenigstens einen oberhalb des Bodens angeordneten Ablauf auf, so daß eine gegenüber dem Niveau des Zu- und Ablaufs erniedrigte Sohle zur Aufnahme der sedimentierten Feststoffe gebildet ist, wie es bei gattungsgemäßen Absetzbecken, wie Geschiebeschächten, an sich bekannt ist.

Im übrigen können der Zulauf und der Ablauf des erfindungsgemäßen Absetzbeckens mit einer Hauptwasserleitung verbunden sein, oder der Zulauf und der Ablauf sind mit einer über ein Ventil, wie einen Schieber, in eine Hauptwasserleitung mündenden Bypassleitung verbunden, d.h. das Absetzbecken ist bezüglich der Haupt(ab)wasserleitung im Nebenstrom geschaltet.

Nachstehend ist die Erfindung anhand von bevorzugten Ausführungsformen unter Bezugnahme auf die Zeichnungen näher erläutert. Dabei zeigen:
- Fig. 1: eine geschnitten dargestellte Seitenansicht eines Absetzbeckens in Form eines Geschiebeschachtes, welches mit einer Ausführungsform einer erfindungsgemäßen Belüftungsvorrichtung ausgestattet ist;
- Fig. 2: eine geschnitten dargestellte Seitenansicht des Absetzbeckens mit der Belüftungsvorrichtung entlang der Ebene II-II gemäß Fig. 1;
- Fig. 3: eine Draufsicht auf das Absetzbecken gemäß Fig. 1 und 2 von oben;
- Fig. 4: eine der Fig. 2 entsprechende Detailansicht einer alternativen Ausgestaltung eines Hohlkörpers der Belüftungsvorrichtung;
- Fig. 5: eine geschnitten dargestellte Seitenansicht eines Absetzbeckens in Form eines Geschiebeschachtes, welches mit einer Ausführungsform einer erfindungsgemäßen Räumeinrichtung ausgestattet ist, wobei die Belüftungsvorrichtung aus Gründen der Übersichtlichkeit nicht dargestellt ist; und
- Fig. 6: eine geschnitten dargestellte Detailansicht der Förderschnecke der Räumeinrichtung gemäß Fig. 5.

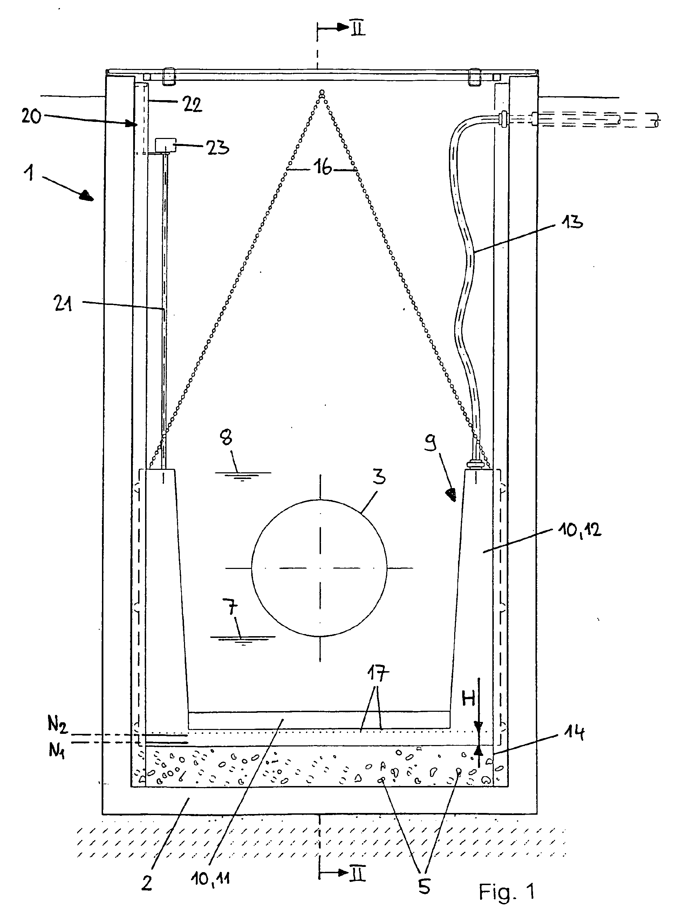

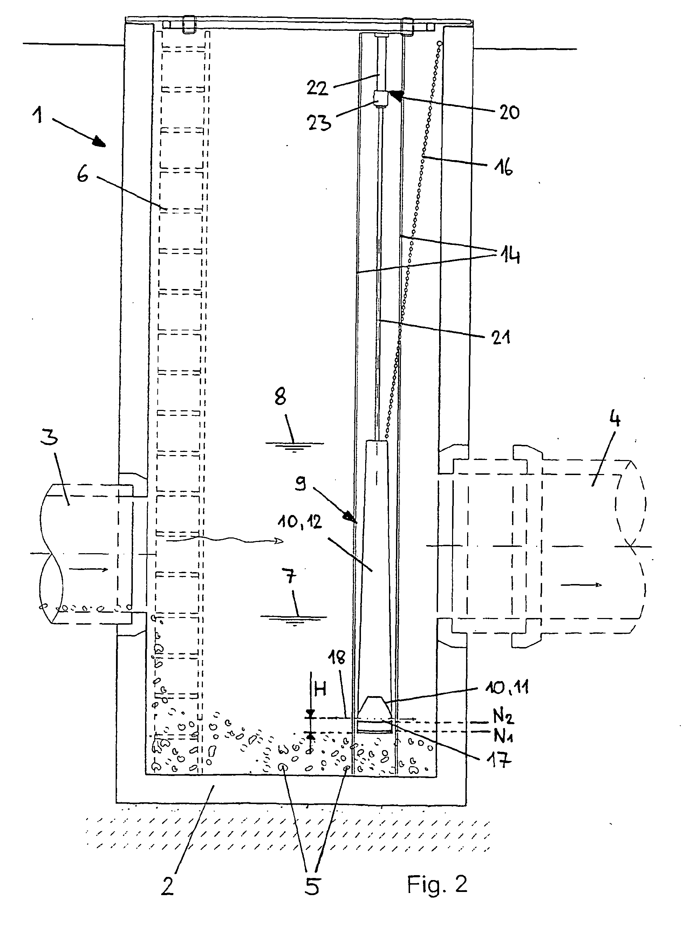

In Fig. 1 bis 3 ist ein Absetzbecken 1 in Form eines Geschiebe- bzw. Geschieberückhalteschachtes dargestellt, welches beim vorliegenden Ausführungsbeispiel einen etwa rechteckigen Querschnitt aufweist, aber selbstverständlich auch mit einem beliebig andersartigen, z.B. runden, ellipsenförmigen, drei- oder mehreckigen Querschnitt versehen sein kann. Oberhalb des Bodens 2 des Absetzbeckens 1 mündet in dieses ein Zulauf 3 sowie ein Ablauf 4, wobei der Zulauf 3 an der entgegengesetzten Seite des Ablaufs 4 angeordnet ist, so daß beim Durchströmen des Absetzbeckens 1 mit Wasser von dem Wasser mitgeführte Feststoffe sedimentieren und sich am Boden 2 des Absetzbeckens 1 anreichern können. Der Zulauf 3 und der Ablauf 4 können entweder innerhalb einer nicht näher gezeigten Wasser- bzw. Abwasserleitung oder einer bezüglich einer solchen im Nebenstrom geschalteten Bypassleitung (ebenfalls nicht näher gezeigt) angeordnet sein. Die in der Regel mineralischen Feststoffe sind in Fig. 1 und 2 mit dem Bezugszeichen 5 bezeichnet. Eine vorzugsweise herausnehmbare Leiter 6 macht das Absetzbecken 1 begehbar. Ein minimaler bzw. ein maximaler, zum Betrieb des Absetzbeckens 1 geeigneter Wasserstand ist in Fig. 1 und 2 mit dem Bezugszeichen 7 bzw. 8 angedeutet.

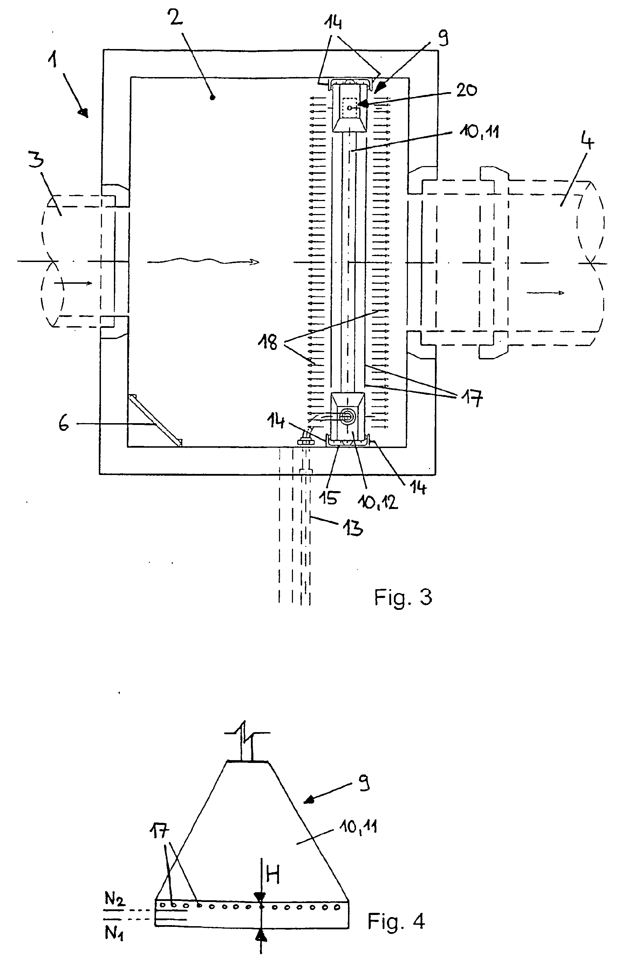

Das Absetzbecken 1 ist mit einer Belüftungsvorrichtung 9 ausgestattet, welche einen größtenteils - im Falle eines maximalen Wasserstandes 8 z.B. gänzlich - unterhalb der Flüssigkeitsoberfläche angeordneten Hohlkörper 10 umfaßt. Der Hohlkörper 10 weist beim vorliegenden Ausführungsbeispiel ein Rohr 11 mit etwa linearer Erstreckung auf, welches quer zur Durchströmungsrichtung des Absetzbeckens 1 angeordnet ist. Der Hohlkörper 10 weist an den Enden des Rohres 11 jeweils einen sich im wesentlichen vertikal nach oben erstreckenden und ebenfalls hohlen Arm 12 auf, wobei der in Fig. 1 rechte Arm 12 über eine Leitung 13 mit einer nicht wiedergegebenen Druckgasquelle, z.B. einer Druckluftquelle, verbunden ist, um den Hohlkörper 10 in seinem Innern mit Druckgas bzw. Druckluft zu beaufschlagen, was kontinuierlich oder in zeitlichen Abständen geschehen kann. Der Hohlkörper 10 der Belüftungsvorrichtung 9 ist höhenverlagerbar in dem Absetzbecken 1 angeordnet, was beim vorliegenden Ausführungsbeispiel mittels innenseitig an den Seitenwänden des Absetzbeckens 1 angebrachten, vertikalen Führungsleisten 14 gewährleistet ist, welche den bzw. Arme 12 des Hohlkörpers 10 zwischen sich aufnehmen. Die Führungsleisten 14 sowie ein diese verbindender, mit der Außenseite der Arme 12 in Kontakt stehender Steg 15 (vgl. Fig. 3) bestehen zweckmäßig aus einem Material mit geringem Reibungskoeffizient, z.B. Polytetrafluorethylen, oder sind mit einem solchen beschichtet. An der oberen Stirnseite der Arme 12 des Hohlkörpers 10 ist ferner eine Zugkette 16 befestigt, um den Hohlkörper 10, beispielsweise zum Zwecke einer Wartung, aus dem Absetzbecken 1 herausnehmen zu können.

Wie weiterhin aus Fig. 1 bis 3 sowie insbesondere auch Fig. 4 ersichtlich, ist das Rohr 11 des Hohlkörpers 10 mit einer Mehrzahl an Austrittsöffnungen 17 perforiert, welche zum Austritt des über die Leitung 13 in den Hohlkörper 10 eingebrachten Gases dienen. Die Austrittsöffnungen 10 sind beim vorliegenden Ausführungsbeispiel auf demselben Niveau hintereinander in Erstreckungsrichtung des Rohres 11 an dessen beiden den seitlichen Wandungen des Absetzbeckens 1 zugewandten, entgegengesetzten Seiten ausgebildet. Der Hohlkörper 10 ist an seiner tiefsten Stelle offen ausgebildet, was beim vorliegenden Ausführungsbeispiel dadurch gewährleistet ist, daß das Rohr 11 nach unten offen ausgebildet ist, so daß es einen im wesentlichen gemäß einem auf dem Kopf stehenden "U" ausgebildeten Querschnitt aufweist (vgl. insbesondere Fig. 1 und die hierzu alternative Ausgestaltung gemäß Fig. 4, bei welcher sich der Querschnitt des Rohres 11 in Richtung seiner offenen, unteren Seite etwa glocken- oder trichterförmig erweitert). Die untere Seite des Rohres 11 kann in jedem Fall entweder gänzlich oder auch nur teilweise offen ausgebildet, z.B. mit einem den offenen Querschnitt überspannenden Gitter versehen sein, um ein Eindringen von Sediment 5 weitestgehend zu vermeiden.

Die Austrittsöffnungen 17 des Rohres 11 des Hohlkörpers 10 sind mit einem solchen Abstand H oberhalb seiner unteren, offenen Seite angeordnet, daß der Hohlkörper 10 bei einem vorherbestimmten ersten Flüssigkeitsniveau N₁ in seinem Innern - z.B. im Bereich der unteren offenen Seite des Rohres 11 oder zwischen dieser und seinen Austrittsöffnungen 17 - einen Auftrieb in dem im Absetzbecken 1 befindlichen Wasser erfährt, während er bei einem vorherbestimmten zweiten Flüssigkeitsniveau N₂ in seinem Innern oberhalb des ersten Flüssigkeitsniveaus N₁ und unterhalb der Austrittsöffnungen 17 oder im Bereich derselben keinen Auftrieb erfährt. Die Funktionsweise der Belüftungsvorrichtung 9 gestaltet sich dabei folgendermaßen:

Bei Inbetriebnahme des geräumten Absetzbeckens 1 wird der Hohlkörper 10 der Belüftungsvorrichtung 9 in das Absetzbekken 1 eingesenkt, wobei sich das Innenvolumen des Hohlkörpers 10 entsprechend dem Flüssigkeitsstand 7 bzw. 8 oder insbesondere zwischen diesen mit Wasser füllt. Nachdem dies geschehen ist, liegt der Hohlkörper 10 mit seinem Rohr 11 auf dem Boden 2 des Absetzbeckens 1 auf. Sodann wird der Hohlkörper 10 mittels der Druckgasquelle über die Leitung 13 mit Gas bzw. Luft beaufschlagt, welche die in den Hohlkörper 10 eingedrungene Flüssigkeit bis zu dem Niveau der Austrittsöffnungen 17 nach unten verdrängt, wonach das Gas aus diesen austritt und den Bodenbereich 2 des Absetzbekkens 1 belüftet, wie es in Fig. 1 und 3 durch die Pfeile 18 angedeutet ist. Zumindest ein Teil des Innenvolumens des Rohres 11 des Hohlkörpers 10 zwischen seiner offenen Unterseite und den von dieser mit dem Abstand H oberhalb angeordneten Austrittsöffnungen 17 bleibt aufgrund des an der offenen Unterseite wirkenden hydrostatischen Flüssigkeitsdruckes, welcher größer ist als der auf die demgegenüber höheren Austrittsöffnungen 17 wirkende hydrostatische Druck, bis zu dem vorherbestimmten, zweiten Flüssigkeitsniveau N₂ mit Wasser befüllt, bei welchem der Hohlkörper 10 keinen Auftrieb erfährt, so daß er weiterhin auf dem Boden 2 des Absetzbeckens 1 aufliegen bleibt.

Während beim fortwährenden Betrieb des Absetzbeckens 1 nun nach und nach Feststoffe 5 im Bereich des Bodens 2 abgeschieden werden, erhöht sich der von außen auf die Austrittsöffnungen 17 des Rohres 11 des Hohlkörpers 10 wirkende Druck, d.h. es kommt zusätzlich zum hydrostatischen Druck auf diesem Niveau, welcher geringer ist als der hydrostatische Druck an der unterhalb der Austrittsöffnungen 17 angeordneten, offenen Unterseite des Rohres 11, ein von den sedimentierten, um die Austrittsöffnungen 17 herum angereicherten Feststoffen 5 bewirkter Druck hinzu, welche das Ausblasen von Gas erschwert. Erreicht dieser zusätzlich Druck einen bestimmten Wert, so wird ein Ausblasen des Gases aus den Austrittsöffnungen 17 des Rohres 11 gehemmt, und das auf dem zweiten Flüssigkeitsniveau N₂ im Innern des Rohres 11 des Hohlkörpers 10 befindliche Wasser wird von dem Gas aus der offenen Unterseite des Rohres 11 hinaus verdrängt. Das Rohr 11 des Hohlkörpers 10 füllt sich folglich mit Gas bzw. Luft, so daß das Flüssigkeitsniveau im Innern des Rohres 11 von dem zweiten Flüssigkeitsniveaus N₂, bei welchem der Hohlkörper 10 keinen Auftrieb erfährt, nach unten absinkt.

Erreicht nun die aus dem Innenvolumen des Rohres 11 des Hohlkörpers 10 nach unten in Richtung seiner offenen Unterseite verdrängte Flüssigkeit das vorherbestimmte, unterhalb des zweiten Flüssigkeitsniveaus N₂ befindliche erste Flüssigkeitsniveau N₁, so erfährt der Hohlkörper 10 einen Auftrieb, welcher ihn dazu veranlaßt, sich nach oben in Richtung der Flüssigkeitsoberfläche 7, 8 zu verlagern. Dieser Vorgang hält so lange an, bis der durch die sedimentierten Feststoffe 5 verursachte, zusätzliche Druck an den Austrittsöffnungen 17 anhält, d.h. bis sich der Hohlkörper 10 auf ein Niveau im Bereich der Oberfläche der sedimentierten Feststoffe 5 nach oben verlagert hat. Ist dies geschehen und hat sich der zusätzliche Druck folglich um einen bestimmten Betrag vermindert oder ist gänzlich fortgefallen, so tritt die vorher von dem im Innern des Rohres 11 des Hohlkörpers 10 befindlichen Gas verdrängte Flüssigkeit wieder in die offene Unterseite des Rohres 11 ein, an welcher der hydrostatische Flüssigkeitsdruck größer ist als an den oberhalb der offenen Unterseite angeordneten Austrittsöffnungen 17, so daß das Flüssigkeitsniveau im Innern des Rohres 10 wieder auf das zweite Flüssigkeitsniveau N₂ ansteigt, bei welchem der Hohlkörper 10 keinen Auftrieb mehr erfährt. Der Hohlkörper 10 der Belüftungsvorrichtung 9 bleibt folglich auf der - aktuellen - Oberfläche der sedimentierten Feststoffe 5 liegen bzw. sinkt auf diese zurück, so daß der Hohlkörper 10 wieder auf der optimalen Höhe bezüglich des Sedimentes 5 angeordnet ist.

Bei der in Fig. 1 bis 3 wiedergegebenen Ausführungsform weist das Absetzbecken 1 ferner eine Meßeinrichtung 20 auf, welche das Höhenniveau des Hohlkörpers 10 der Belüftungsvorrichtung 9 relativ zu dem Absetzbecken 1 erfaßt. Die Meßeinrichtung 20 umfaßt im wesentlichen einen mit dem Hohlkörper 10 verbundenen Signalgeber 23, welcher z.B. an einer an der Stirnseite eines Arms 12 des Hohlkörpers 10 parallel zur Verlagerungsrichtung des Hohlkörpers 10, hier vertikal, angeordneten Stange 21 angebracht ist. Sie umfaßt weiterhin einen stationär, z.B. an einer Wandung des Absetzbeckens 1 angebrachten Sensor 22. Alternativ kann selbstverständlich auch der Sensor 22 mit dem Hohlkörper 10 verbunden sein, während der Signalgeber 23 stationär angeordnet ist. Die Meßeinrichtung 10 erfaßt folglich das jeweils aktuelle Niveau des Hohlkörpers 9 der Belüftungsvorrichtung 9 und somit indirekt die aktuelle Füllhöhe an Sediment 5, so daß sie eine wirksame, in die Belüftungsvorrichtung 9 integrierte Anzeige der abgeschiedenen Sedimentmenge darstellt, so daß es ersichtlich ist, wenn das Absetzbecken 1 geräumt werden sollte. Die Meßeinrichtung 20 kann im übrigen auf beliebige bekannte Weise, vorzugsweise berührungsfrei und z.B. kapazitiv, magnetisch, elektromagnetisch, z.B. mittels Lichtschranken, akustisch, z.B. mittels Echolot etc., arbeiten.

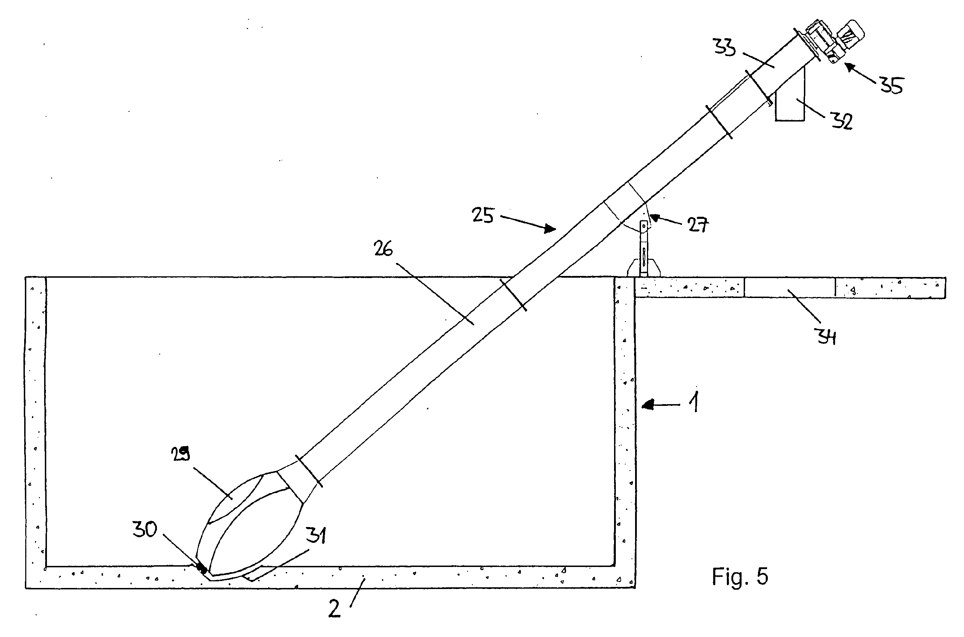

Fig. 5 zeigt eine in dem Absetzbecken 1 bzw. in dem Geschiebeschacht angeordnete bevorzugte Ausführungsform einer Räumeinrichtung 25 zum Entfernen des im Bodenbereich 2 abgeschiedenen Sedimentes (in Fig. 5 nicht dargestellt), wobei die Belüftungsvorrichtung 9 (vgl. Fig. 1 bis 3) zur besseren Veranschaulichung nicht nochmals wiedergegeben ist. Die Räumeinrichtung 25 umfaßt ein Förderrohr 26, welches am Rand des Absetzbeckens 1, z.B. mittels eines nicht im einzelnen dargestellten Pendellagers 27, drehbar gelagert ist.

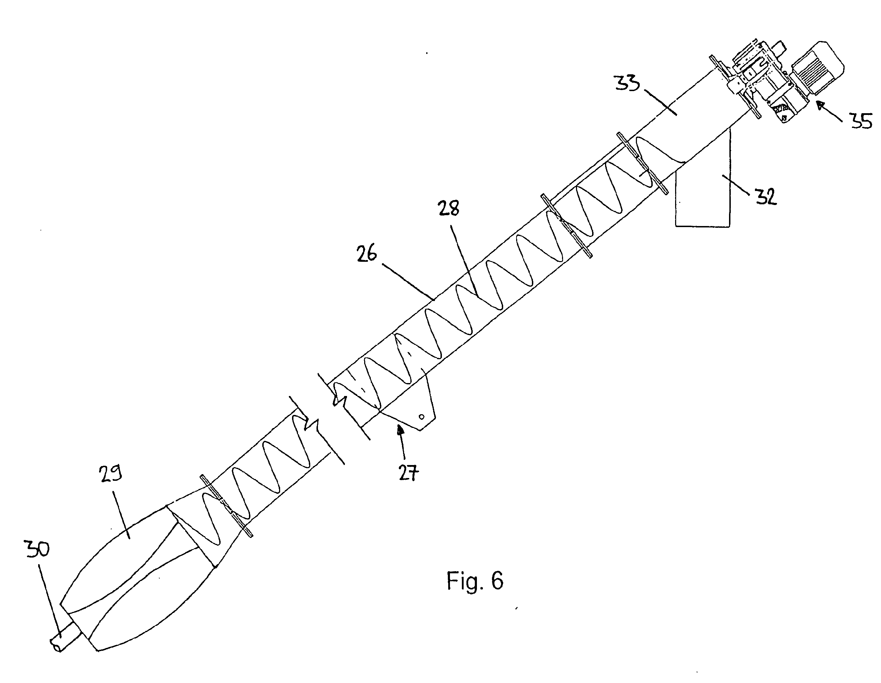

Wie aus Fig. 6 ersichtlich, ist innenseitig des Förderrohres 26 eine Förderschnecke angeordnet, welche beim vorliegenden Ausführungsbeispiel starr mit dem Förderrohr 26 verbunden, beispielsweise am Innenumfang desselben verschweißt, ist. Fig. 6 zeigt eine geschnitten dargestellte Detailansicht der Förderschnecke der Räumeinrichtung gemäß Fig. 5. Die Abförderung der am Boden 2 des Absetzbeckens 1 sedimentierten Feststoffe 5 (vgl. Fig. 1 und 2) geschieht folglich durch Rotieren des gesamten Förderrohres 26 mitsamt der Förderschnecke 28, was den Vorteil hat, daß es nicht zu einem Blockieren der Schnecke 28 gegenüber dem Rohr 26 kommen kann, wie es bei an einer zentralen Welle gelagerten und relativ zu einem Förderrohr drehbaren Förderschnecken bei der Förderung von Feststofffraktionen mit unterschiedlichen Partikelgrößen häufig der Fall ist. An seinem dem Boden 2 des Absetzbeckens 1 zugewandten Ende ist an dem Förderrohr 26 eine ebenfalls starr an dem Rohr 26 befestigte Schaufel 29 angeordnet, welche bei einer Rotation des Förderrohres 26 die sedimentierten Feststoffe an die Förderschnecke 28 überführt. An der Stirnseite der Schaufel 29 ist ein Wellenstummel 30 angebracht, über welchen das Förderrohr 26 am Boden 2 des Absetzbeckens 1 bzw. in einer bodenseitigen Einlaufmulde 31 desselben gelagert ist.

An seinem der Schaufel 29 abgewandten Ende ist das Förderrohr 26 mit einem Öffnungen, Durchbrüche oder dergleichen (nicht dargestellt) aufweisenden Auslaufkopf 33 versehen, über welche die mittels der Förderschnecke 28 nach oben transportierten Feststoffe aus dem Förderrohr 26 ausgetragen werden können. Sie gelangen z.B. in ein radial von dem Auslaufkopf 33 nach unten führendes Abführrohr 32 und fallen von dort durch eine bodenseitige Öffnung 34 in einen Sammelbehälter (nicht gezeigt). Zum Drehantrieb des Förderrohres 26 mit der Förderschnecke 28 ist ein an dem der Schaufel 29 abgewandten Ende des Rohres 26 angeordneter Motor 35 vorgesehen.

Die Räumeinrichtung 25 ermöglicht in Verbindung mit der Belüftungsvorrichtung 9 einen kontinuierlichen Betrieb des Absetzbeckens 1 ohne Stillstandszeiten, da die sedimentierten Feststoffe abgefördert werden können, ohne die Belüftungsvorrichtung 9 mittels der Zugkette 16 aus dem Absetzbecken 1 zu entfernen.

## Patentansprüche

1. Belüftungsvorrichtung (9) zur Belüftung eines Absetzbeckens (1) für sedimentierbare Feststoffe (5) enthaltende Flüssigkeiten, insbesondere Wasser, mit einem zumindest teilweise unterhalb der Flüssigkeitsoberfläche (7, 8) anordbaren und mit einer Druckgasquelle verbindbaren Hohlkörper (10) mit wenigstens einer Austrittsöffnung (17) für im Innern des Hohlkörpers (10) befindliches Gas, **dadurch gekennzeichnet, daß** der Hohlkörper (10) höhenverlagerbar in dem Absetzbecken (1) anordbar ist, daß der Hohlkörper (10) an einer tieferen, insbesondere an seiner tiefsten Stelle offen ausgebildet ist, und daß die wenigstens eine Austrittsöffnung (17) mit einem solchen Abstand oberhalb der tieferen, offenen Stelle des Hohlkörpers (10) angeordnet ist, daß der Hohlkörper (10) bei einem vorherbestimmten ersten Flüssigkeitsniveau (N₁) in seinem Innern an seiner tieferen, offenen Stelle oder zwischen derselben und seiner wenigstens einen Austrittsöffnung (17) einen Auftrieb in der Flüssigkeit erfährt, während er bei einem vorherbestimmten zweiten Flüssigkeitsniveau (N₂) in seinem Innern oberhalb des ersten Flüssigkeitsniveaus (N₁) und unterhalb der wenigstens einen Austrittsöffnung (17) oder an derselben keinen Auftrieb erfährt.

2. Belüftungsvorrichtung nach Anspruch 1, **dadurch gekennzeichnet, daß** der Hohlkörper (10) eine Mehrzahl an Austrittsöffnungen (17) aufweist.

3. Belüftungsvorrichtung nach Anspruch 2, **dadurch gekennzeichnet, daß** die Mehrzahl an Austrittsöffnung (17) im wesentlichen auf demselben Niveau angeordnet sind.

4. Belüftungsvorrichtung nach einem der Ansprüche 1 bis 3, **dadurch gekennzeichnet, daß** der Hohlkörper (10) wenigstens ein im wesentlichen U-förmiges, nach unten offenes Rohr (11) aufweist.

5. Belüftungsvorrichtung nach Anspruch 4, **dadurch gekennzeichnet, daß** sich der Querschnitt des Rohres (11) nach unten erweitert.

6. Belüftungsvorrichtung nach einem der Ansprüche 1 bis 5, **dadurch gekennzeichnet, daß** der Hohlkörper (10) im wesentlichen linear, insbesondere im wesentlichen vertikal, höhenverlagerbar in dem Absetzbecken (1) anordbar ist.

7. Belüftungsvorrichtung nach einem der Ansprüche 1 bis 6, **dadurch gekennzeichnet, daß** dem Hohlkörper (10) eine Meßeinrichtung (20) zur Erfassung seiner Höhe relativ zu dem Absetzbecken (1) zugeordnet ist.

8. Belüftungsvorrichtung nach Anspruch 7, **dadurch gekennzeichnet, daß** die Meßeinrichtung (20) wenigstens einen mit dem Hohlkörper (10) verbundenen Signalgeber (23) und wenigstens einen stationär anordbaren, das Signal des Signalgebers (23) erfassenden Sensor (22) aufweist.

9. Absetzbecken (1) für sedimentierbare Feststoffe (5) enthaltende Flüssigkeiten, insbesondere Wasser, mit einer zumindest teilweise unterhalb der Flüssigkeitsoberfläche (7, 8) angeordneten Belüftungsvorrichtung (9) mit einem mit einer Druckgasquelle verbindbaren Hohlkörper (10) mit wenigstens einer Austrittsöffnung (17) für im Innern des Hohlkörpers (10) befindliches Gas, **dadurch gekennzeichnet, daß** der Hohlkörper (10) der Belüftungsvorrichtung (9) höhenverlagerbar in dem Absetzbecken (1) angeordnet ist, daß der Hohlkörper (10) an einer tieferen, insbesondere an seiner tiefsten Stelle offen ausgebildet ist, und daß die wenigstens eine Austrittsöffnung (17) mit einem solchen Abstand oberhalb der tieferen, offenen Stelle des Hohlkörpers (10) angeordnet ist, daß der Hohlkörper (10) bei einem vorherbestimmten ersten Flüssigkeitsniveau (N₁) in seinem Innern an seiner tieferen, offenen Stelle oder zwischen derselben und seiner wenigstens einen Austrittsöffnung (17) einen Auftrieb in der Flüssigkeit erfährt, während er bei einem vorherbestimmten zweiten Flüssigkeitsniveau (N₂) in seinem Innern oberhalb des ersten Flüssigkeitsniveaus (N₁) und unterhalb der wenigstens einen Austrittsöffnung (17) oder an derselben keinen Auftrieb erfährt.

10. Absetzbecken nach Anspruch 9, **dadurch gekennzeichnet, daß** die Belüftungsvorrichtung (9) die Merkmale wenigstens eines der Ansprüche 2 bis 8 aufweist.

11. Absetzbecken nach Anspruch 9 oder 10, **dadurch gekennzeichnet, daß** es von einem Geschiebeschacht gebildet ist.

12. Absetzbecken nach einem der Ansprüche 9 bis 11, **dadurch gekennzeichnet, daß** es eine zur Abförderung von im Bodenbereich (2) des Absetzbeckens (1) sedimentierten Feststoffen (5) geeignete Räumeinrichtung (25) mit wenigstens einer Förderschnecke (28) aufweist.

13. Absetzbecken nach Anspruch 12, **dadurch gekennzeichnet, daß** die Förderschnecke (28) der Räumeinrichtung (25) im Innern eines Förderrohres (26) starr angeordnet und gemeinsam mit dem Förderrohr (26) rotierbar ist.

14. Absetzbecken nach einem der Ansprüche 9 bis 13, **dadurch gekennzeichnet, daß** es wenigstens einen oberhalb seines Bodens (2) angeordneten Zulauf (3) sowie wenigstens einen oberhalb des Bodens (2) angeordneten Ablauf (4) aufweist.

15. Absetzbecken nach Anspruch 14, **dadurch gekennzeichnet, daß** der Zulauf (3) und der Ablauf (4) mit einer Hauptwasserleitung verbunden sind.

16. Absetzbecken nach Anspruch 14, **dadurch gekennzeichnet, daß** der Zulauf (3) und der Ablauf (4) mit einer über ein Ventil in eine Hauptwasserleitung mündenden Bypassleitung verbunden sind.

## Claims

1. A ventilation device (9) for ventilating a sedimentation tank (1) for liquids containing sedimentable solids (5), particularly water, with a hollow body (10) that can be arranged at least partially below the liquid surface (7, 8) and can be connected to a pressure gas source, with at least one outlet opening (17) for gas present inside the hollow body (10), **characterised in that** the hollow body (10 can be arranged in a vertically displaceable manner in the sedimentation tank (1), **in that** the hollow body (10) is designed open at a lower point, in particular at its lowest point, and **in that** the at least one outlet opening (17) is arranged at such a distance above the lower, open position of the hollow body (10) that the hollow body (10) experiences a buoyancy of the liquid at a predetermined first liquid level (N₁) in its interior at its lower open point or between same and its at least one outlet opening (17), whilst experiences no buoyancy at a predetermined second liquid level (N₂) and below the at least one outlet opening (17) and at same.

2. The ventilation device according to Claim 1, **characterised in that** the hollow body (10) has a plurality of outlet openings (17).

3. The ventilation device according to Claim 2, **characterised in that** the plurality of outlet openings (17) are arranged essentially at the same level.

4. The ventilation device according to any one of Claims 1 to 3, **characterised in that** the hollow body (10) has at least one essentially U-shaped, downwardly open pipe (11).

5. The ventilation device according to Claim 4, **characterised in that** the cross-section of the pipe (11) extends downwards.

6. The ventilation device according to any one of Claims 1 to 5, **characterised in that** the hollow body (10) can be arranged essentially linearly, and in particular essentially vertically in the sedimentation tank (1) in a vertically displaceable manner.

7. The ventilation device according to any one of Claims 1 to 6, **characterised in that** a measuring device (20) is assigned to the hollow body (10) for recording its height relative to the sedimentation tank (1).

8. The ventilation device according to Claim 7, **characterised in that** the measuring device (20) has at least one signal transducer (23) connected to the hollow body (10) and at least one sensor (22) that can be arranged fixedly and records the signal from the signal transducer (23).

9. A sedimentation tank (1) for liquids containing sedimentable solids (5), particularly water, with a ventilation device (9) arranged at least partially below the liquid surface (7, 8), with a hollow body (10) that can be connected to a pressure gas source with at least one outlet opening (17) for gas present inside the hollow body (10), **characterised in that** the hollow body (10) of the ventilation device (9) is arranged in a vertically displaceable manner in the sedimentation tank (1), **in that** the hollow body (10) is designed open at a lower, in particular at its lowest point, and **in that** the at least one outlet opening (17) is arranged at such a distance above the lower, open point of the hollow body (10) that the hollow body (10) experiences a buoyancy in the liquid at a predetermined first liquid level (N₁) in its interior at a lower, open point or between same and its at least one outlet opening (17), whilst it experiences no buoyancy at a predetermined second liquid level (N₂) in its interior above the first liquid level (N₁) and below the at least one outlet opening (17) or at same.

10. The sedimentation tank according to Claim 9, **characterised in that** the ventilation device (9) has the features of at least one of Claims 2 to 8.

11. The sedimentation tank according to Claim 9 or 10, **characterised in that** it is formed from a settlement tank.

12. The sedimentation tank according to any one of Claims 9 to 11, **characterised in that** it has a clearing device (25) suitable for eliminating solids (5) sedimented in the bottom region (2) of the sedimentation tank (1), with at least one conveyor screw (28).

13. The sedimentation tank according to Claim 12, **characterised in that** the conveyor screw (28) of the clearing device (25 is arranged rigidly inside a feed tube (26) and is rotatable together with the feed tube (26).

14. The sedimentation tank according to any one of Claims 9 to 13, **characterised in that** it has at least one intake (3) arranged above its bottom (2) and at least one outlet (4) arranged above the bottom (2).

15. The sedimentation tank according to Claim 14, **characterised in that** the intake (3) and outlet (4) are connected to a main water pipe.

16. The sedimentation tank according to Claim 14, **characterised in that** the intake (3) and the outlet (4) are connected to a bypass pipe opening into a main water pipe via a valve.

## Revendications

1. Dispositif d'aération (9) prévu pour l'aération d'un bassin de sédimentation (1) de liquides, notamment d'eau, contenant des matières solides (5) sédimentables, avec un corps creux (10) pouvant être disposé au moins en partie en dessous de la surface du liquide (7, 8) et pouvant être relié à une source de gaz sous pression, ledit corps creux étant doté d'au moins une ouverture de sortie (17) pour le gaz se trouvant à l'intérieur du corps creux (10), **caractérisé en ce que** le corps creux (10) est disposé de façon à pouvoir être déplacé en hauteur dans le bassin de sédimentation (1) et que le corps creux (10) est réalisé de façon ouverte au niveau d'un point placé plus en profondeur, notamment au niveau du point le plus profond et que l'au moins une ouverture de sortie (17) est disposée à une telle distance au-dessus du point ouvert le plus profond du corps creux (10) que le corps creux (10) subit une poussée verticale dans le liquide au premier niveau de liquide (N₁), dans sa partie intérieure située au niveau de son point ouvert le plus profond ou entre celui-ci et son au moins une ouverture de sortie (17), tandis qu'il ne subit aucune poussée verticale à un deuxième niveau de liquide (N₂) prédéfini dans sa partie intérieure située au-dessus du premier niveau de liquide (N₁) et en dessous de l'au moins une ouverture de sortie (17) ou au niveau de celle-ci.

2. Dispositif d'aération selon la revendication 1, **caractérisé en ce que** le corps creux (10) comporte une pluralité d'ouvertures de sortie (17).

3. Dispositif d'aération selon la revendication 2, **caractérisé en ce que** la pluralité d'ouvertures de sortie (17) est disposée pour l'essentiel au même niveau.

4. Dispositif d'aération selon l'une quelconque des revendications 1 à 3, **caractérisé en ce que** le corps creux (10) comporte au moins un tube (11) ouvert vers le bas pour l'essentiel en forme de U.

5. Dispositif d'aération selon la revendication 4, **caractérisé en ce que** la section transversale du tube (11) s'élargit vers le bas.

6. Dispositif d'aération selon l'une quelconque des revendications 1 à 5, **caractérisé en ce que** le corps creux (10) peut être disposé pour l'essentiel de façon linéaire, notamment pour l'essentiel verticalement, de façon à pouvoir être déplacé dans le sens de la hauteur dans le bassin de sédimentation (1).

7. Dispositif d'aération selon l'une quelconque des revendications 1 à 6, **caractérisé en ce qu'**un dispositif de mesure (20) est associé au corps creux (10) pour permettre de détecter sa hauteur par rapport au bassin de sédimentation (1).

8. Dispositif d'aération selon la revendication 7, **caractérisé en ce que** le dispositif de mesure (20) comporte au moins un émetteur de signaux (23) relié au corps creux (10) et au moins un capteur (22) disposé de façon stationnaire détectant le signal de l'émetteur de signaux (23).

9. Bassin de sédimentation (1) de liquides, notamment d'eau, contenant des matières solides (5) sédimentables, équipé d'un dispositif d'aération (9) disposé au moins en partie en dessous de la surface du liquide (7, 8) avec un corps creux (10) pouvant être relié à une source de gaz sous pression, ledit corps creux étant doté d'au moins une ouverture de sortie (17) pour le gaz se trouvant à l'intérieur du corps creux (10), **caractérisé en ce que** le corps creux (10) du dispositif d'aération (9) est disposé de façon à pouvoir être déplacé en hauteur dans le bassin de sédimentation (1), que le corps creux (10) est réalisé de façon ouverte au niveau d'un point placé plus en profondeur, notamment au niveau du point le plus profond et que l'au moins une ouverture de sortie (17) est disposée à une telle distance au-dessus du point ouvert le plus profond du corps creux (10) que le corps creux (10) subit une poussée verticale dans le liquide à un premier niveau de liquide (N₁), dans sa partie intérieure située au niveau de son point ouvert le plus profond ou entre celui-ci et son au moins une ouverture de sortie (17), tandis qu'il ne subit aucune poussée verticale à un deuxième niveau de liquide (N₂) prédéfini dans sa partie intérieure située au-dessus du premier niveau de liquide (N₁) et en dessous de l'au moins une ouverture de sortie (17) ou au niveau de celle-ci.

10. Bassin de sédimentation selon la revendication 9, **caractérisé en ce que** le dispositif d'aération (9) présente les caractéristiques d'au moins une des revendications 2 à 8.

11. Bassin de sédimentation selon la revendication 9 ou 10, **caractérisé en ce qu'**il est constitué par un puits de charriage.

12. Bassin de sédimentation selon l'une quelconque des revendications 9 à 11, **caractérisé en ce qu'**il comporte un dispositif d'évacuation (25) adapté à l'évacuation des matières solides (5) sédimentées au fond (2) du bassin de sédimentation (1) et équipé d'au moins une vis de transport sans fin (28).

13. Bassin de sédimentation selon la revendication 12, **caractérisé en ce que** la vis de transport sans fin (28) du dispositif d'évacuation (25) est disposé de façon rigide à l'intérieur d'un tube d'extraction (26) et peut tourner conjointement avec le tube d'extraction (26).

14. Bassin de sédimentation selon l'une quelconque des revendications 9 à 13, **caractérisé en ce qu'**il comporte au moins une conduite d'amenée (3) disposée au-dessus de son fond (2) ainsi qu'au moins une conduite d'évacuation (4) disposée au dessus de ce même fond (2).

15. Bassin de sédimentation selon la revendication 14, **caractérisé en ce que** la conduite d'amenée (3) et la conduite d'évacuation (4) sont reliées à une conduite d'eau principale.

16. Bassin de sédimentation selon la revendication 14, **caractérisé en ce que** la conduite d'amenée (3) et la conduite d'évacuation (4) sont reliées à une conduite de dérivation débouchant par le biais d'une soupape dans une conduite d'eau principale.
